Europäisches Patentamt

European Patent Office

Office européen des brevets

(11) Veröffentlichungsnummer: **0 330 136 B1**

(19)
(12)

# EUROPÄISCHE PATENTSCHRIFT

(45) Veröffentlichungstag der Patentschrift: **15.06.94**

(21) Anmeldenummer: **89102974.6**

(22) Anmeldetag: **21.02.89**

(51) Int. Cl.⁵: **C07F 7/00**, C09D 11/02

(54) Neue Zirkonium(IV)-Chelate, deren Herstellung und deren Verwendung in Druckfarben.

(30) Priorität: **25.02.88 DE 3805879**

(43) Veröffentlichungstag der Anmeldung:
**30.08.89 Patentblatt 89/35**

(45) Bekanntmachung des Hinweises auf die
Patenterteilung:
**15.06.94 Patentblatt 94/24**

(84) Benannte Vertragsstaaten:
**BE DE ES FR GB IT NL**

(56) Entgegenhaltungen:
**GB-A- 885 679**

(73) Patentinhaber: **HÜLS AKTIENGESELLSCHAFT**

**D-45764 Marl(DE)**

(72) Erfinder: **Barfurth, Dieter**
**Adenauerstrasse 34**
**D-5210 Troisdorf-Spich(DE)**
Erfinder: **Lindzus, Claus**
**Dürener Strasse 44**
**D-5000 Köln 41(DE)**
Erfinder: **Nestler, Heinz, Dr.**
**Rembrandtstrasse 73**
**D-5210 Troisdorf-Eschmar(DE)**

# EP 0 330 136 B1

**Beschreibung**

Gegenstand der vorliegenden Erfindung sind Zirkonium(IV)-Verbindungen, die sich durch gute Löslichkeit in organischen Lösungsmitteln, durch ihre Reaktivität als Katalysatoren und Vernetzer und durch eine gewisse Hydrolysestabilität auszeichnen.

Ester der hypothetischen Zirkonium(IV)-Säure, auch als Tetraalkylzirkonate bezeichnet, sind seit längerem bekannt und werden als Katalysatoren, z.B. bei Veresterungsreaktionen, oder als Vernetzungsreagentien, z.B. für funktionelle Gruppen tragende Polymere, vielseitig eingesetzt. Um die für manche Verwendungszwecke zu stark ausgeprägte Reaktivität solcher Zirkonate wie Tetrapropyl- oder Tetrabutylzirkonat herabzusetzen, können die Alkylgruppen durch chelatisierend wirkende Gruppen ersetzt werden, was z.B. zu Zirkoniumacetylacetonat führt. Als weitere organische Zirkoniumverbindungen spielen Acylate, wie Zirkoniumpropionat, technisch eine Rolle.

Solche Metallsäureester finden Verwendung als Additiv in Flexodruckfarben auf Basis von Nitrocellulose, Celluloseesterderivaten oder anderen geeigneten Druckfarbenbindemitteln, um deren Haftung auf kritischen Substraten, wie Polyolefinfolien, sowie ihre Lösungsmittel- und Hitzestabilität zu verbessern; gegenüber den häufiger verwendeten Titanaten, z B. Titanacetylacetonat, ist bei Zirkonaten die Gefahr sowohl der Vergilbung weißer Farbtöne als auch die Wechselwirkung mit Antioxidantien stark vermindert. Von den zur Verfügung stehenden Zirkoniumverbindungen ist allerdings keine problemfrei: die Alkylzirkonate vernetzen die Farbe schon Vorratsgefäß, Zirkoniumacetylacetonat löst sich in den in Frage kommenden Lösemitteln nur außerordentlich gering, und Zirkoniumpropionat kann in geruchlicher Hinsicht zu Schwierigkeiten führen.

Es bestand deshalb die Aufgabe, Zirkoniumverbindungen zu finden, deren vernetzende Wirkung in ähnlicher Weise wie beim Zirkoniumacetylacetonat herabgesetzt ist, so daß eine Vernetzung der mit diesen Verbindungen versetzten Bindemitteln erst während oder nach dem Verdunsten des Lösemittels aus der verdruckten Farbe stattfindet, die aber eine vergleichsweise gute Löslichkeit in z.B. Farbe aufweisen und deren Geruch gering ist.

In Erfüllung dieser Aufgabe wurden nun gegebenenfalls Alkoxygruppen enthaltende Zirkonium(IV)-Chelate gefunden, die dadurch gekennzeichnet sind, daß sie als Chelatbildner Ester der Zitronensäure enthalten. Zum Einsatz in den obengenannten Druckfarben gelangen diese Zirkoniumchelate als alkoholische Lösungen, so daß diese Lösungen und deren Verwendung in Druckfarben ebenfalls in Erfüllung der obengenannten Aufgabe gefunden wurden.

Die Alkoxygruppen der neuen Zirkoniumchelate haben vorzugsweise 2 bis 4 C-Atome; sie können jedoch auch für spezielle Auwendungen bis zu einschließlich 8 C-Atome haben, die auch durch Sauerstoffatome unterbrochen sein können.

Die Zitronensäureester-Komponente der neuen Chelate leitet sich von Zitronensäurepartialestern, vorzugsweise von den Zitronensäuredialkylestern, ab, deren Alkylgruppen vorzugsweise 2 bis 4 C-Atome, allgemein 1 bis 8 C-Atome, aufweisen.

In den neuen Chelaten können eine bis vier der Alkoxygruppen eines Zirkonsäureesters durch die genannten Zitronensäureestergruppen ersetzt sein. Demzufolge kann das Verhältnis der an das zentrale Zr-Atom gebundenen Alkoxygruppen zu den Zitronensäureestergruppen zwischen 3 : 1 und 0 : 4 liegen.

Die neuen Zirkoniumchelate lassen sich auf einfache Weise herstellen, indem man Zirkoniumsäureester mit der dem gewünschten Endprodukt entsprechenden Menge an Zitronensäureester umsetzt, wonach der Alkohol abdestilliert werden kann. Die Umsetzung wird zweckmäßigerweise in der Weise durchgeführt, daß man den Zirkoniumsäureester dem auf Reaktionstemperatur erwärmten Zitronensäureester hinzufügt. Die Reaktionstemperatur liegt im Bereich zwischen 20 und 100 °C, vorzugsweise zwischen 60 und 80 °C. Die Umsetzung ist im allgemeinen nach einer Reaktionsdauer von 2 bis 5 Stunden beendet, wenn im bevorzugten Temperaturbereich gearbeitet wird. Zur Herstellung der reinen Ester wird der gesamte Alkohol abdestilliert, der bei der Reaktion entstanden ist, sowie auch derjenige, der ggf. als Verdünnungsalkohol mit dem Zirkoniumsäureester eingebracht wurde.

Wenn man die alkoholischen Lösungen der neuen Zirkoniumchelate erhalten will, ist es selbstverständlich nicht notwendig, den gesamten bei der Umsetzung frei werdenden Alkohol abzudestillieren. Es wird dann nur so viel Alkohol abdestilliert, wie zur Herstellung der einsatzfertigen Chelate notwendig ist. Gegebenenfalls braucht auch kein Alkohol abdestilliert zu ‚werden. Die auf diese Weise erhaltenen Lösungen haben einen Gehalt an Chelaten, der über 70 Gew.-% liegt.

Die Lösungen, die gegebenenfalls mit Alkoholen oder anderen Lösungsmitteln weiter verdünnt werden können, zeigen beim Einsatz in Druckfarben hinsichtlich Vernetzung und Haftung verbesserte Eigenschaften gegenüber Titanacetylacetonat. Sie lassen sich in Mengen zwischen 1 und 10 Gew.-%, vorzugsweise zwischen 1 und 4 Gew.-%, in die Druckfarben untermischen, wobei es von Vorteil ist, daß auch bei längerer

2

Standdauer keine Gelierung eintritt. Nach dem Aufziehen der Farbe auf einen Untergrund ist die Haftung auf dem Untergrund gegenüber Titanacetylacetonat überraschend jedoch verbessert.

Die Eigenfarbe der neuen Chelate ist hellgelb bis gelb. Durch den Zusatz in der angegebenen Menge werden weiße Druckfarben praktisch nicht verfärbt. Es tritt auch keine Verfärbung ein, wenn diese Druckfarben auf solche Untergründe appliziert werden, die Antioxidantien auf Phenolbasis enthalten.

Ein erheblicher Vorteil ist der flüssige Zustand des Produktes. Weiter ist das Produkt leichter vermischbar und verteilbar bzw. besser löslich in z.B. Druckfarben als festes Zirkoniumacetylacetonat.

Bei den Druckfarben, für die die erfindungsgemäßen Zirkoniumchelat-Lösungen eingesetzt werden, handelt es sich um an sich bekannte Druckfarben auf der Basis von Bindemitteln wie Nitrocellulose (NC-Fabren) oder andere Celluloseesterderivate, die durch Metallsäureester vernetzt werden. Im Vergleich zu anderen Zirkoniumverbindungen besitzen die beanspruchten Zirkoniumchelate die anfangs geschilderten Nachteile jedoch nicht mehr.

**Beispiele**

**Allgemeine Herstellvorschrift für die erfindungsgemäßen Zirkoniumchelate**

In einen 1.000 ml-Kolben, der mit Rührer, Thermometer, Tropftrichter und Rückflußkühler versehen ist, wird Diethylzitrat eingewogen und auf 60 °C erwärmt. Über den Tropftrichter wird das Tetraalkylzirkonat in die gut gerührte Reaktionsmasse gegeben. Nach beendeter Zugabe wird noch 30 min bei 60 °C gerührt. Anschließend wird abgekühlt und gegebenenfalls abgefüllt (Beispiele 1 bis 8) oder mittels Vakuum-Destillation der Alkohol abdestilliert (Beispiele 9 bis 12).

Beispiele 1 bis 4:   Diethylzitrat-Komplexe aus n-Propylzirkonat,      alkoholhaltig

.................................................................................

Ansatz                                Stoffdaten

.................................................................................

*

| Bsp. Nr. | Diethylzitrat g | Mol | n-Propylzirkonat g | Mol | $ZrO_2$-Geh. | Brechungs-zahl $n^{20}_D$ | Dichte g/ml 20 °C | Viskosität mPa.s 20 °C |
|---|---|---|---|---|---|---|---|---|
| 1 | 248 | 1,0 | 455 | 1,0 | 17,5% | 1,450 | 1,11 | 93 |
| 2 | 347,2 | 1,4 | 318,5 | 0,7 | 13,0% | 1,449 | 1,12 | 104 |
| 3 | 446,4 | 1,8 | 273 | 0,6 | 10,3% | 1,452 | 1,15 | 130 |
| 4 | 446,4 | 1,8 | 204,8 | 0,45 | 8,5% | 1,452 | 1,15 | 162 |

.................................................................................

* = n-Propylzirkonat: 72 gew.-%ig in n-Propanol

EP 0 330 136 B1

**Beispiele 5 bis 8:** Diethylzitrat-Komplexe aus n-Butylzirkonat, alkoholhaltig

................................................................................

Ansatz Stoffdaten

................................................................................

$**$

| Bsp. Nr. | Diethylzitrat | | n-Butylzirkonat | | $ZrO_2$-Geh. | Brechungs-zahl $n^{20}_D$ | Dichte g/ml. 20 °C | Viskosität mPa.s 20 °C |
|---|---|---|---|---|---|---|---|---|
| | g | Mol | g | Mol | | | | |
| 5 | 248 | 1,0 | 457 | 1,0 | 17,5% | 1,460 | 1,12 | 140 |
| 6 | 347,2 | 1,4 | 319,9 | 0,7 | 13,0% | 1,458 | 1,13 | 135 |
| 7 | 446,4 | 1,8 | 274,2 | 0,6 | 10,3% | 1,457 | 1,15 | 176 |
| 8 | 446,4 | 1,8 | 205,7 | 0,45 | 8,5% | 1,457 | 1,15 | 215 |

$**$ = n-Butylzirkonat: 84 gew.-%ig in n-Butanol

EP 0 330 136 B1

**Beispiele 9 bis 12: Diethylzitrat-Zirkoniumkomplexe, Alkohol abgetrennt**

| Bsp. Nr. | Ausgangsmaterial aus Beispiel ... | Abgetrennter Alkohol / % d.Th. Art | Stoffdaten Brechungszahl $n_D^{20}$ | Viskosität mPa.s, 20°C |
|---|---|---|---|---|
| 9 | 2 | n-Propanol/95,9 | 1,485 | 44000 |
| 10 | 4 | n-Propanol/64,1 | 1,474 | 6100 |
| 11 | 6 | n-Butanol/107,6 | 1,488 | 13800 |
| 12 | 8 | n-Butanol /80,5 | 1,478 | 25000 |

Für die Produkte nach den vorangehenden Beispielen 1 bis 12 wurden bei der Elementaranalyse folgende Ergebnisse gefunden (gef. in Gew.-%), welche mit den berechneten Werten (ber. in Gew.-%) für die angegebenen Formeln übereinstimmen:

| *Beispiel 2:* | | C | H | $ZrO_2$ |
|---|---|---|---|---|
| für $C_{26}H_{44}O_{16}Zr + 4.C_3H_8O$ | gef.<br>ber. | 48,0<br>48,3 | 8,0<br>8,0 | 12,7<br>13,0 |
| *Beispiel 3:* | | | | |
| für $C_{33}H_{52}O_{22}Zr + 5.C_3H_8O$ | gef.<br>ber. | 48,1<br>48,3 | 7,9<br>7,7 | 10,1<br>10,3 |
| *Beispiel 6:* | | | | |
| für $C_{28}H_{48}O_{16}Zr + 2,62.C_4H_{10}O$ | gef.<br>ber. | 49,5<br>49,9 | 8,1<br>8,0 | 13,7<br>13,3 |
| *Beispiel 7:* | | | | |
| für $C_{34}H_{54}O_{22}Zr + 3,62.C_4H_{10}O$ | gef.<br>ber. | 49,5<br>49,6 | 7,9<br>7,7 | 10,1<br>10,5 |
| *Beispiel 9:* | | | | |
| für $C_{26}H_{44}O_{16}Zr$ | gef.<br>ber. | 44,4<br>44,4 | 6,3<br>6,3 | 17,4<br>17,5 |
| *Beispiel 11:* | | | | |
| für $C_{28}H_{48}O_{16}Zr$ | gef.<br>ber. | 46,5<br>46,0 | 6,7<br>6,6 | 16,3<br>16,8 |

**Beispiel 13**

Beschreibung der haftvermittelnden Wirkung erfindungsgemäßer Zirkoniumchelate in der Nitrocellulose-Druckfarbe für Polypropylen

Zu einer Nitrocellulose-Druckfarbe, die 25 Gew.-% Nitrocellulose des Norm-Typs 34 E, gelöst in Ethanol-Ethylacetat und Titandioxid als Weißpigment enthält, wurden 4 Gew.-% der erfindungsgemäßen Zirkoniumchelatkomplexe (s. Tabelle) gegeben und einige Minuten eingerührt. Mittels einer Filmziehspirale wurde die so modifizierte Druckfarbe in einer Naßschichtdicke von 12 um auf koronavorbehandelte Polypropylenfolie aufgezogen und nach 15 min Lufttrocknung 1 min bei 60 °C im Umluftschrank nachgetrocknet. Anschließend wurde die Haftung der Druckfarbe auf dem Polypropylen mittels Klebeband-Abriß ermittelt:

Auf eine Fläche von ca. 4 $cm^2$ wurde ein Klebefilmstreifen (z.B. Tesafilm) aufgeklebt und in einem Ruck wieder abgezogen.

**Tabelle der Ergebnisse:**

| | Additiv | Abriß von ... % der Farbschicht |
|---|---|---|
| Nach Beispiel | 2 | ca. 2 % |
| nach Beispiel | 3 | ca. 4 % |
| nach Beispiel | 4 | ca. 4 % |
| nach Beispiel | 6 | ca. 2 % |
| nach Beispiel | 7 | ca. 3 % |
| nach Beispiel | 8 | ca. 4 % |
| Titanacetylacetonat (zum Vergleich) | | ca. 5 % |

Der Vergleich mit dem Titanacetylacetonat wurde in gleicher Weise und mit den gleichen Mengen durchgeführt.

EP 0 330 136 B1

**Beispiel 14**

Prüfung der Reaktion der erfindungsgemäßen Zirkoniumchelatkomplexe mit Antioxidantien

Beim Vermischen von Butylhydroxyanisol-(BHA)-Lösungen mit Titanacetylacetonat-Lösungen tritt eine starke Verfärbung auf. Da Verbindungen wie BHA als Antioxidantien auch in zu bedruckenden Folien enthalten sind, wurde die Reaktion von Lösungen der erfindungsgemäßen Produkte mit einer BHA-Lösung geprüft:
Die Verfärbung ist wesentlich geringer, somit ist auch die Vergilbungsgefahr beim
Bedrucken von Folien mit Druckfarben, die die erfindungsgemäßen Produkte enthalten, als deutlich geringer anzusehen.

Tabelle der Ergebnisse (Mischung 1 gew.-%iger Lösungen in Isopropanol)

................................................................

| Additiv | Farbzahl nach Gardner |
|---|---|
| Titanacetylacetonat | 11 |
| nach Beispiel 2 | 4 |
| nach Beispiel 4 | 3 - 4 |

................................................................

EP 0 330 136 B1

**Beispiel 15**

Viskositätsverhalten einer NC-Farbe nach Zusatz der erfindungsgemäßen Zirkonium-chelatkomplexe:

Als Prüfmedium diente eine 25 Gew.-% esterlösliche Nitrocellulose enthaltende weiße Druckfarbe, der 4 Gew.-% der zu prüfenden Substanzen zugesetzt wurden. Die Viskosität wurde mit einem Rotationsviskosimeter bestimmt, gelagert wurde zwischen den Messungen bei 50 °C.

Tabelle der Ergebnisse

Viskosität in mPa.s nach ... Lagerzeit bei 50 °C

| Additiv | 1 Tag | 1 Woche | 2 Wochen | 1 Monat | 2 Monate |
| --- | --- | --- | --- | --- | --- |
| Titanacetylacetonat | 560 | 480 | 480 | 440 | 850 |
| nach Beispiel 2 | 700 | 630 | 570 | 420 | 830 |
| nach Beispiel 4 | 700 | 640 | 550 | 330 | 400 |

**Patentansprüche**

1. Zirkonium(IV)-Chelate, **dadurch gekennzeichnet**, daß sie, gegebenenfalls neben Alkoxygruppen mit 1 bis 8 C-Atomen, als Chelatbildner Zitronensäurealkylester aufweisen.

**2.** Zirkonium(IV)-Chelate gemäß Anspruch 1, **dadurch gekennzeichnt**, daß das Verhältnis der an das zentrale Zr-Atom gebundenen Alkoxygruppen zu den Zitronensäureestergruppen zwischen 3 : 1 und 0 : 4 liegt.

**3.** Zirkonium(IV)-Chelate gemäß den Ansprüchen 1 oder 2, **dadurch gekennzeichnet**, daß die Alkoxygruppen solche mit den Resten $C_2H_5$, $C_3H_7$ oder $C_4H_9$ sind.

**4.** Zirkonium(IV)-Chelat gemaß einem der Ansprüche 1 bis 3, **dadurch gekennzeichnet**, daß der Zitronensäureesterrest ein Zitronensauredialkylesterrest ist.

**5.** Lösungen von Zirkonium(IV)-Chelaten nach einem der vorangehenden Ansprüche in solchen Alkoholen, deren Alkylrest demjenigen der Alkoxygruppe des Zirkonchelates entspricht.

**6.** Verfahren zur Herstellung von Zirkonium(IV)-Chelaten gemäß einem der Ansprüche 1 bis 4, **dadurch gekennzeichnet**, daß man Zirkoniumsäureester mit Zitronensäurealkylestern umsetzt und den bei der Umsetzung frei werdenden Alkohol und gegebenenfalls vorhandenen Verdünnungsalkohol abdestilliert.

**7.** Verfahren zur Herstellung von alkoholischen Lösungen der Zirkonchelate gemäß Anspuch 5, dadurch gekennzeichnet, daß man Zirkoniumsäureester mit Zitronensäurealkylestern bei Temperaturen zwischen 20 und 100 °C umsetzt und das erhaltene Reaktionsprodukt auf den gewünschten Alkoholgehalt einstellt.

**8.** Verwendung von Zirkonium(IV)-Chelaten gemäß einem der Ansprüche 1 bis 4 oder von Zirkonium(IV)-Chelat-Lösungen gemäß Anspruch 5 als Bestandteil von Druckfarben.

## Claims

**1.** Zirconium (IV) chelates, **characterised in that** they have citric acid alkylesters as chelate formers, with possibly, in addition alkoxy groups with 1 to 8 C-atoms.

**2.** Zirconium (IV) chelates according to claim 1, **characterised in that** the ratio of the alkoxy groups bound to the central Zr-atom to the citric acid ester groups lies between 3:1 and 0:4.

**3.** Zirconium (IV) chelates according to claims 1 or 2, characterised in that the alkoxy groups are those with the residues $C_2H_5$, $C_3H_7$ or $C_4H_9$.

**4.** Zirconium (IV) chelate according to claims 1 to 3, **characterised in that** the citric acid ester residue is a citric acid dialkylester residue.

**5.** Solutions of zirconium (IV) chelates according to one of the foregoing claims in those alcohols whose alkyl residue corresponds to that of the alkoxy group of the zirconium chelate.

**6.** Process for the preparation of zirconium (IV) chelates according to one of claims 1 to 4, **characterised in that** zirconic acid esters are reacted with citric acid alkylesters and the alcohol being liberated in the reaction, and possibly diluent alcohol which is present, is distilled off.

**7.** Process for the preparation of alcoholic solutions of zirconium chelates according to claim 5, **characterised in that** zirconic acid esters are reacted with citric acid alkylesters at temperatures between 20 and 100 °C and the reaction product obtained is adjusted to the desired alcohol content.

**8.** Use of zirconium (IV) chelates according to one of claims 1 to 4 or of zirconium (IV) chelate solutions according to claim 5 as constituent of printing inks.

## Revendications

**1.** Chélates de zirconium-(IV), caractérisés en ce qu'ils présentent, éventuellement en plus de groupes alcoxy ayant 1 à 8 atomes de carbone, des esters alkyliques de l'acide citrique comme formateurs de chélates.

**2.** Chélates de zirconium-(IV) selon la revendication 1, caractérisés en ce que le rapport des groupes alcoxy, fixés sur l'atome de Zr central, aux groupes esters d'acide citrique se situe entre 3:1 et 0:4.

**3.** Chélates de zirconium-(IV) selon les revendications 1 ou 2, caractérisés en ce que les groupes alcoxy sont ceux comportant les restes $C_2H_5$, $C_3H_7$ ou $C_4H_9$.

**4.** Chélate de zirconium-(IV) selon l'une des revendications 1 à 3, caractérisé en ce que le reste ester d'acide citrique est un reste ester dialkylique d'acide citrique.

**5.** Solutions de chélates de zirconium(IV) selon l'une des revendications précédentes dans des alcools dont le reste alkyle correspond à celui du groupe alcoxy du chélate de zirconium.

**6.** Procédé de préparation de chélates de zirconium(IV) selon l'une des revendications 1 à 4, caractérisé en ce qu'on fait réagir un ester d'acide de zirconium avec des esters alkyliques d'acide citrique, et l'on chasse par distillation l'alcool libéré lors de la réaction et l'alcool éventuellement présent à titre de diluant.

**7.** Procédé pour préparer les solutions alcooliques de chélates de zirconium selon la revendication 5, procédé caractérisé en ce qu'on fait réagir un ester d'acide de zirconium avec des esters alkyliques d'acide citrique à des températures comprises entre 20 et 100°C et en ce qu'on ajuste à la teneur en alcool voulue le produit obtenu par cette réaction.

**8.** Utilisation de chélates de zirconium-(IV) selon l'une des revendications 1 à 4 ou de solutions de chélates de zirconium (IV) selon la revendication 5, comme constituants d'encres d'imprimerie.